# EUROPEAN PATENT SPECIFICATION

(11) **EP 3 919 721 B1**
(45) Date of publication and mention of the grant of the patent: **28.05.2025**
(21) Application number: 21167484.1
(22) Date of filing: 08.04.2021
(51) Int. Cl.: F01D 5/08, F01D 9/06, F01D 25/12

(54) **COOLING SYSTEM FOR A GAS TURBINE ENGINE**
KÜHLSYSTEM FÜR EIN GASTURBINENTRIEBWERK
SYSTÈME DE REFROIDISSEMENT POUR UN MOTEUR À TURBINE À GAZ

(30) Priority: 09.04.2020 US 202016844683
(43) Date of publication of application: 08.12.2021
(73) Proprietor: RTX Corporation, Farmington, CT 06032 (US)
(72) Inventor: DIBENEDETTO, Enzo, Berlin, 06037 (US); BIFULCO, Anthony R., Ellington, 06029 (US); ACKERMANN, William K., East Hartford, 06118 (US); CODERRE, Paul E., East Hampton, 06424 (US); MOSLEY, John H., Portland, 06480 (US); KRAMER, Stephen K., Cromwell, 06416 (US)
(74) Representative: Dehns

(56) References cited:
- EP-B1- 3 090 163
- WO-A1-95/04225
- US-A- 2 859 910
- US-A- 3 291 447
- US-A- 5 224 819
- US-A1- 2016 003 149
- US-A1- 2016 090 914

## Description

### BACKGROUND

Exemplary embodiments of the present disclosure pertain to the art of gas turbine engines, more particularly, to gas turbine engine cooling.

Compressor pressure ratios have been steadily increasing leading to increases in compressor exit temperatures. This increase in compressor exit temperature may push the material limits of various components of the gas turbine engine. Add-on cooling systems may be provided to direct a cooling fluid to various components of the gas turbine engine that may result in increased weight, increased cost, increased space claims, as well as reductions in durability associated with the add on cooling system.

EP 3090163 B1, US 2016/090914 A1, and US 2016/003149 A1 each disclose examples of cooling systems for gas turbine engines.

### SUMMARY

According to the invention a gas turbine engine is provided as recited by claim 1.

### BRIEF DESCRIPTION OF THE DRAWINGS

The following descriptions are provided by way of example only and should not be considered limiting in any way. With reference to the accompanying drawings, like elements are numbered alike:
FIG. 1 is a partial cross-sectional view of a gas turbine engine;
FIG. 2 is a partial cross-sectional view of a rear portion of the compressor section of the gas turbine engine;
FIG. 3 is another partial cross-sectional view of a rear portion of the compressor section of the gas turbine engine; and
FIG. 4 is yet another partial cross-sectional view of a rear portion of the compressor section of the gas turbine engine.

### DETAILED DESCRIPTION

A detailed description of one or more embodiments of the disclosed apparatus and method are presented herein by way of exemplification and not limitation with reference to the Figures.

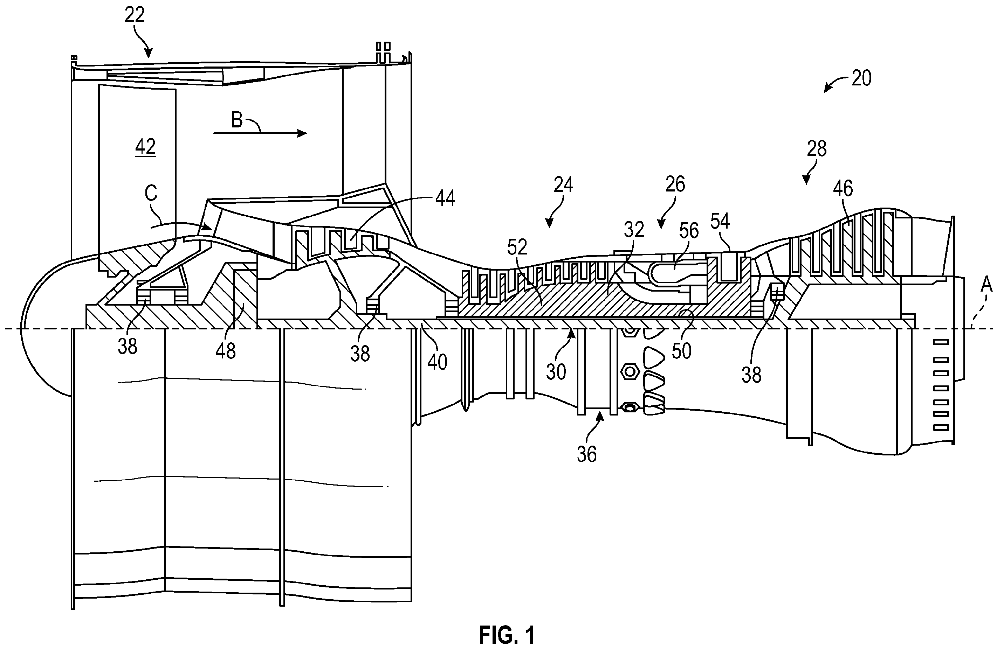

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

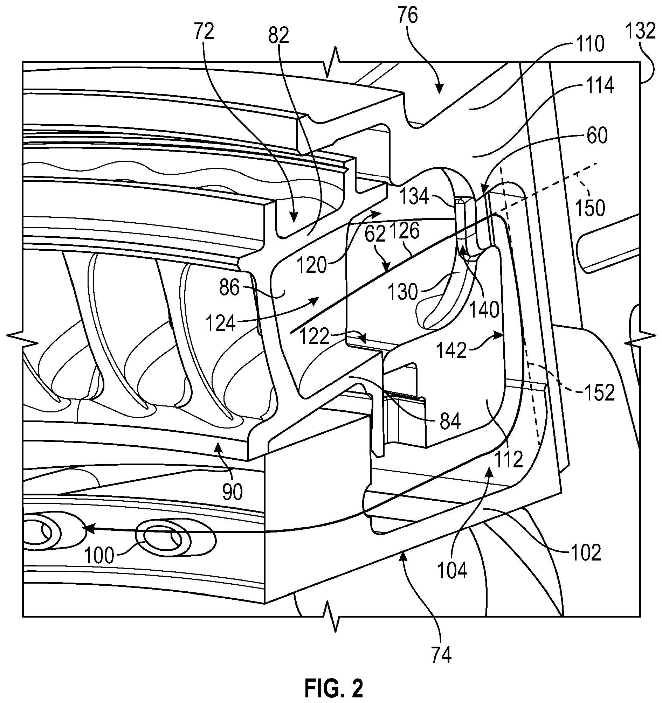

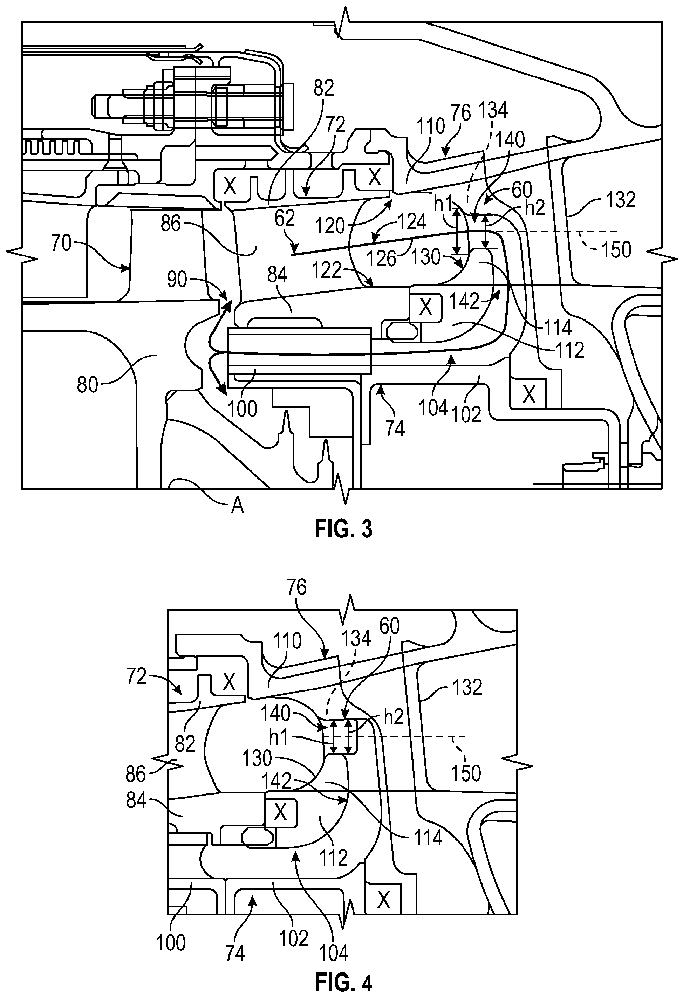

Referring to FIGS. 2-4, and according to the present invention, an integrally formed cooling system 60 is provided with the compressor section 24 of the gas turbine engine 20. The integrally formed cooling system 60 avoids the use of external or integrated heat exchangers and instead takes advantage of a thermal gradient phenomenon within the airflow that flows through at least one stage of the compressor section 24. The integrally formed cooling system 60 is arranged to provide a recirculation circuit 62 that is defined along a gas flow path that routes a portion of a central flow along a stream line from an aft portion of the compressor section 24 towards a more forward portion of the compressor section 24. The integrally formed cooling system 60 may be applied to the latter stages of the high pressure compressor 52, however the integrally formed cooling system 60 may be applied to other portions of the compressor section 24 or other portions of the gas turbine engine 20. Referring to FIGS. 2 and 3, the compressor section 24 includes a plurality of blades or a blade 70, a plurality of guide vanes or a guide vane 72, a tangential air injection system 74, and a diffuser case 76.

The blade 70 radially extends from a disk or a rotor 80 such that the blade 70 is rotatable about the central longitudinal axis A of the gas turbine engine 20. Each blade 70 is secured to the disk or rotor 80 such that blade 70 is further away from axis A than the disk or rotor 80. In other words, the blade 70 extends radially away from the disk or rotor 80 such that the blade 70 is at a further radial distance from the axis A than the disk or rotor 80. The guide vane 72 is disposed axially downstream of the blade 70 along or relative to the central longitudinal axis A.

The guide vane 72 has an outer vane platform 82, an inner vane platform 84, and an airfoil 86 that extends between the outer vane platform 82 and the inner vane platform 84. The outer vane platform 82 is disposed radially outboard of the inner vane platform 84, relative to the central longitudinal axis A. The inner vane platform 84 is disposed radially inboard of the outer vane platform 82, relative to the central longitudinal axis A. In other words, the outer vane platform 82 is at a further radial distance from the central longitudinal axis A than the inner vane platform 84.

The inner vane platform 84 is spaced apart from the rotor 80 such that a gap 90 is disposed between or defined between the inner vane platform 84 and the rotor 80. The recirculation circuit 62 extends or flows through the gap 90 to redirect a cooling air stream back towards a leading edge of the airfoil 86 of the guide vane 72, to provide a cooling effect to the blade 70 extending from the rotor 80 and/or the airfoil 86 of the guide vane 72.

The tangential air injection system 74 extends between and engages the inner vane platform 84 of the guide vane 72 and a portion of the diffuser case 76, as will be described later. The tangential air injection system 74 includes an injector 100, a body 102, and a feed passage 104. The injector 100 is connected to the inner vane platform 84 and is disposed radially between the inner vane platform 84 and the central longitudinal axis A. The injector 100 extends towards the gap 90. The injector 100 may be provided separately from the body 102 and may extend through the body 102 or the injector 100 may be integrally formed with the body 102. The body 102 extends between the injector 100 and a portion of the diffuser case 76. The feed passage 104 is defined between the body 102 and the portion of the diffuser case 76. The injector 100 is fluidly connected to the feed passage 104 and injects fluid received through the feed passage 104 into or towards the gap 90.

The diffuser case 76 is disposed axially downstream of the guide vane 72 along the central longitudinal axis A. The diffuser case 76 includes a first case portion 110, a second case portion 112, and a vane or strut 114 that extends between the first case portion 110 and the second case portion 112. The first case portion 110 is disposed adjacent to the outer vane platform 82 such that the first case portion 110 is disposed radially outboard of the second case portion 112, relative to the central longitudinal axis A. The second case portion 112 is disposed adjacent to the inner vane platform 84 such that the second case portion 112 is disposed radially inboard of the first case portion 110, relative to the central longitudinal axis A. In other words, the first case portion 110 is at a further radial distance from the central longitudinal axis A than the second case portion 112. The strut 114 radially extends between the first case portion 110 and the second case portion 112.

A first flow surface or first flow area 120 extends along inner surfaces of the outer vane platform 82 and the first case portion 110. A second flows surface or second flow area 122 extends along inner surfaces of the inner vane platform 84 and the second case portion 112. A mid-flow area 124 is disposed between the first flow area 120 and the second flow area 122. Local temperatures or bulk temperatures proximate the first flow area 120 and proximate the second flow area 122 have a higher temperature as compared to local temperatures proximate the mid-flow area 124 through which a streamline 126 that extends through a mid-span or midpoint of the airfoil 86 of the guide vane 72 extends.

The strut 114 includes a leading surface 130, a trailing surface 132 disposed opposite the leading surface 130, and a pair of side surfaces (first and second side surfaces) 134 that extend between the pair of side surfaces 134. A diffuser cavity is defined between the leading surface 130, the airfoil 86, and portions of the first case portion 110, the outer vane platform 82, the inner vane platform 84, and the second case portion 112. A fluid pressure within the diffuser cavity is generally less than a fluid pressure within the gap 90.

The strut 114 defines an inlet 140 and a passageway 142. The inlet 140 is radially aligned with the mid-point or mid-span of the airfoil 86 of the guide vane 72 such that the inlet 140 receives airflow that flows along the streamline 126 through the mid-flow area 124. The inlet 140 extends from the leading surface 130 towards the trailing surface 132 along a first axis 150 that is disposed generally parallel to the central longitudinal axis A and is disposed parallel and coaxial with the streamline 126. The inlet 140 is disposed between the pair of side surfaces 134.

The passageway 142 extends from the inlet 140 through the second case portion 112 along a second axis 152 that is disposed transverse to the central longitudinal axis A and is disposed transverse to the first axis 150. The passageway 142 is fluidly connected to the inlet 140 and the feed passage 104. The recirculation circuit 62 of the integrally formed cooling system 60 is defined by the inlet 140 of the strut 114, the passageway 142 of the strut 114, the feed passage 104 that is defined between the tangential air injection system 74 and the inner vane platform 84, and the injector 100. The strut 114 may define another passageway 144 that is disposed axially downstream of the passageway 142 and is disposed parallel to the passageway 142. The passageway 142 is fluidly isolated from another passageway 144.

The recirculation circuit 62 is arranged such that a fluid flow flows along a gas flow path along the streamline 126 through the inlet 140, through the passageway 142, through the feed passage 104, through the injector 100 and into the gap 90. The fluid flow directs the cooler air, relative to the hotter air proximate the first flow area 120 and the second flow area 122, within the mid-flow area 124 proximate the midpoint of the airfoil 86 of the guide vane 72 through the strut 114 and through the tangential air injection system 74 back to a forward portion of the airfoil 86 of the guide vane 72 and/or an aft portion of the blade 70 and the rotor 80 to cool the blade 70 and the rotor 80 and possibly the guide vane 72. This flow further occurs due to the higher fluid pressure proximate the inlet 140 and the lower fluid pressure proximate the gap 90.

The inlet 140 has a first height, h1, measured proximate the leading surface 130 of the strut 114 between radially opposed surfaces of the inlet 140 along the second axis 152. The inlet 140 has a second height, h2, measured aft or downstream of the leading surface 130 and the first height, h1, between radially opposed surfaces of the inlet 140 that extends along the second axis 152. The first height, h1, is greater than the second height, h2, as shown in FIG. 3. The first height, h1, is less than the second height, h2, as shown in FIG. 4.

The recirculation circuit 62 of the integrally formed cooling system 60 routes cooler gas path flow toward a region between the airfoil 86 of the guide vane 72 and the blade 70 and rotor 80, without flowing through any type of internal or external heat exchanger system. The recirculation circuit 62 provides a simple, compact, and integral way to obtain cooling improvement and therefore improve component life of various components of the compressor section 24.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention as defined by the claims. In addition, many modifications may be made to adapt a particular situation or material to the teachings of the present invention without departing from the scope of the invention as defined by the claims. Therefore, it is intended that the present invention not be limited to the particular embodiment disclosed as the best mode contemplated for carrying out this present invention, but that the present invention will include all embodiments falling within the scope of the claims.

## Claims

1. A gas turbine engine (20) having a central longitudinal axis (A), comprising:
a compressor section (24) arranged about said axis (A), and an integrally formed cooling system (60) arranged to provide a recirculation circuit (62), the compressor section comprising:
a plurality of blades (70) radially extending from and secured to a rotor (80),
a guide vane (72) disposed axially downstream of the plurality of blades, the guide vane having an outer vane platform (82), an inner vane platform (84), and an airfoil (86) extending between the outer vane platform and the inner vane platform, the inner vane platform being spaced apart from the rotor along the central longitudinal axis such that a gap (90) is disposed between the inner vane platform and the rotor,
a diffuser case (76) disposed axially downstream of the guide vane, the diffuser case having a first case portion (110) that is disposed adjacent to the outer vane platform, a second case portion (112) that is disposed adjacent to the inner vane platform, and a strut (114) radially extending between the first case portion and the second case portion, the strut defining an inlet (140) that is radially aligned with a mid-point of the airfoil (86) of the guide vane (72) and that extends from a leading surface (130) of the strut towards a trailing surface (132) of the strut along a first axis (150) that is disposed generally parallel to said central longitudinal axis, the strut (114) further defining a passageway (142) that extends from the inlet (140) through the second case portion (112) along a second axis (152) that is disposed transverse to said central longitudinal axis, and
a tangential air injection system (74) that extends between and is connected to the inner vane platform (84) and the second case portion (112), the tangential air injection system including an injector (100), a body (102), and a feed passage (104), wherein the injector (100) is disposed radially between the inner vane platform (84) and said central longitudinal axis and connected to the inner vane platform (84) and the body (102) that extends between the injector and the second case portion (112), the injector (100) extending towards the gap (90), the feed passage (104) is defined between the body (102) and the second case portion (112), the feed passage (104) being fluidly connected to the injector (100) and the passageway (142), and the injector is configured to inject cooling air received through the feed passage (104) into or towards the gap (90), wherein:
the recirculation circuit (62) is defined along an airflow path that routes a portion of a central airflow along a stream line (126) from an aft portion of the compressor section (24) towards a more forward portion of the compressor section, thereby defining an airflow path that flows along the mid-point of the airfoil (86) of the guide vane (72), through a mid-flow area (124), through the inlet (140) of the strut, through the passageway (142), through the feed passage (104), through the injector (100), and through the gap (90) to redirect a cooling air stream back towards a forward portion of the airfoil (86) of the guide vane (72) and/or an aft portion of the blade (70) and the rotor (80), and
the strut (114) includes a pair of side surfaces (134) that extend between the leading surface (130) and the trailing surface (132), and a diffuser cavity is defined between the leading surface (130), the airfoil (86), and portions of the first case portion (110), the outer vane platform (82), the inner vane platform (84), and the second case portion (112).

## Patentansprüche

1. Gasturbinentriebwerk (20), das eine zentrale Längsachse (A) aufweist, umfassend:
einen Kompressorabschnitt (24), der um die Achse (A) angeordnet ist, und ein integral ausgebildetes Kühlsystem (60), das dazu angeordnet ist, einen Umwälzkreislauf (62) bereitzustellen, wobei der Kompressorabschnitt umfasst:
eine Vielzahl von Schaufelblättern (70), die sich radial von einem Rotor (80) erstrecken und an diesem gesichert sind,
eine Leitschaufel (72), die axial stromabwärts von der Vielzahl von Schaufelblättern angeordnet ist, wobei die Leitschaufel eine äußere Schaufelplattform (82), eine innere Schaufelplattform (84) und einen Flügel (86) aufweist, der sich zwischen der äußeren Schaufelplattform und der inneren Schaufelplattform erstreckt, wobei die innere Schaufelplattform von dem Rotor entlang der zentralen Längsachse derart beabstandet ist, dass ein Spalt (90) zwischen der inneren Schaufelplattform und dem Rotor angeordnet ist,
ein Diffusorgehäuse (76), das axial stromabwärts von der Leitschaufel angeordnet ist, wobei das Diffusorgehäuse einen ersten Gehäuseabschnitt (110), der benachbart zu der äußeren Schaufelplattform angeordnet ist, einen zweiten Gehäuseabschnitt (112), der benachbart zu der inneren Schaufelplattform angeordnet ist, und eine Strebe (114) aufweist, die sich radial zwischen dem ersten Gehäuseabschnitt und dem zweiten Gehäuseabschnitt erstreckt, wobei die Strebe einen Einlass (140) definiert, der radial auf einen Mittelpunkt des Flügels (86) der Leitschaufel (72) ausgerichtet ist und der sich von einer Vorderfläche (130) der Strebe zu einer Hinterfläche (132) der Strebe entlang einer ersten Achse (150) erstreckt, die im Allgemeinen parallel zu der zentralen Längsachse angeordnet ist, wobei die Strebe (114) ferner einen Durchgang (142) definiert, der sich von dem Einlass (140) durch den zweiten Gehäuseabschnitt (112) entlang einer zweiten Achse (152) erstreckt, die quer zu der zentralen Längsachse angeordnet ist, und
ein tangentiales Luftinjektionssystem (74), das sich zwischen der inneren Schaufelplattform (84) und dem zweiten Gehäuseabschnitt (112) erstreckt und mit diesen verbunden ist, wobei das tangentiale Luftinjektionssystem einen Injektor (100), einen Körper (102) und einen Zufuhrkanal (104) beinhaltet, wobei der Injektor (100) radial zwischen der inneren Schaufelplattform (84) und der zentralen Längsachse angeordnet und mit der inneren Schaufelplattform (84) und dem Körper (102) verbunden ist, der sich zwischen dem Injektor und dem zweiten Gehäuseabschnitt (112) erstreckt, sich der Injektor (100) zu dem Spalt (90) erstreckt, der Zufuhrkanal (104) zwischen dem Körper (102) und dem zweiten Gehäuseabschnitt (112) definiert ist, der Zufuhrkanal (104) mit dem Injektor (100) und dem Durchgang (142) fluidverbunden ist und der Injektor dazu konfiguriert ist, durch den Zufuhrkanal (104) empfangene Kühlluft in den Spalt (90) oder zu diesem zu injizieren, wobei:
der Umwälzkreislauf (62) entlang eines Luftstrompfads definiert ist, der einen Abschnitt eines zentralen Luftstroms entlang einer Stromlinie (126) von einem hinteren Abschnitt des Kompressorabschnitts (24) zu einem weiter vorne liegenden Abschnitt des Kompressorabschnitts leitet, wodurch ein Luftstrompfad definiert wird, der entlang des Mittelpunkts des Flügels (86) der Leitschaufel (72), durch einen Mittelstrombereich (124), durch den Einlass (140) der Strebe, durch den Durchgang (142), durch den Zufuhrkanal (104), durch den Injektor (100) und durch den Spalt (90) strömt, um einen Kühlluftstrom zurück zu einem vorderen Abschnitt des Flügels (86) der Leitschaufel (72) und/oder einem hinteren Abschnitt des Schaufelblatts (70) und des Rotors (80) umzuleiten, und
die Strebe (114) ein Paar Seitenflächen (134) beinhaltet, die sich zwischen der Vorderfläche (130) und der Hinterfläche (132) erstrecken, und ein Diffusorhohlraum zwischen der Vorderfläche (130), dem Flügel (86) und Abschnitten des ersten Gehäuseabschnitts (110), der äußeren Schaufelplattform (82), der inneren Schaufelplattform (84) und dem zweiten Gehäuseabschnitt (112) definiert ist.

## Revendications

1. Moteur à turbine à gaz (20) présentant un axe longitudinal central (A), comprenant :
une section de compresseur (24) disposée autour dudit axe (A), et un système de refroidissement formé d'un seul tenant (60) disposé pour fournir un circuit de recirculation (62), la section de compresseur comprenant :
une pluralité de pales (70) se prolongeant radialement à partir d'un rotor (80) et fixées à celui-ci,
une aube directrice (72) disposée axialement en aval de la pluralité d'aubes, l'aube directrice comportant une plate-forme d'aube externe (82), une plate-forme d'aube interne (84) et un profil aérodynamique (86) se prolongeant entre la plate-forme d'aube externe et la plate-forme d'aube interne, la plate-forme d'aube interne étant espacée du rotor le long de l'axe longitudinal central de telle sorte qu'un espace (90) soit disposé entre la plate-forme d'aube interne et le rotor,
un carter de diffuseur (76) disposé axialement en aval de l'aube directrice, le carter de diffuseur comportant une première partie de carter (110) qui est disposée adjacente à la plate-forme d'aube externe, une seconde partie de carter (112) qui est disposée adjacente à la plate-forme d'aube interne, et une entretoise (114) se prolongeant radialement entre la première partie de carter et la seconde partie de carter, l'entretoise définissant une entrée (140) qui est radialement alignée avec un point médian du profil aérodynamique (86) de l'aube directrice (72) et qui se prolonge d'une surface d'attaque (130) de l'entretoise vers une surface de fuite (132) de l'entretoise le long d'un premier axe (150) qui est disposé généralement parallèlement audit axe longitudinal central, l'entretoise (114) définissant également un passage (142) qui se prolonge de l'entrée (140) à travers la seconde partie de carter (112) le long d'un second axe (152) qui est disposé transversalement audit axe longitudinal central, et
un système d'injection d'air tangentiel (74) qui se prolonge entre et est connecté à la plate-forme d'aube interne (84) et à la seconde partie de carter (112), le système d'injection d'air tangentiel incluant un injecteur (100), un corps (102) et un passage d'alimentation (104), l'injecteur (100) étant disposé radialement entre la plate-forme d'aube interne (84) et ledit axe longitudinal central et connecté à la plate-forme d'aube interne (84) et au corps (102) qui se prolonge entre l'injecteur et la seconde partie de carter (112), l'injecteur (100) se prolongeant vers l'espace (90), le passage d'alimentation (104) étant défini entre le corps (102) et la seconde partie de carter (112), le passage d'alimentation (104) étant connecté de manière fluidique à l'injecteur (100) et au passage (142), et l'injecteur étant configuré pour injecter de l'air de refroidissement reçu à travers le passage d'alimentation (104) dans ou vers l'espace (90), dans lequel :
le circuit de recirculation (62) est défini le long d'un trajet d'écoulement d'air qui achemine une partie d'un écoulement d'air central le long d'une ligne de courant (126) depuis une partie arrière de la section de compresseur (24) vers une partie plus avant de la section de compresseur, définissant ainsi un trajet d'écoulement d'air qui s'écoule le long du point médian du profil aérodynamique (86) de l'aube directrice (72), à travers une zone d'écoulement médiane (124), à travers l'entrée (140) de l'entretoise, à travers le passage (142), à travers le passage d'alimentation (104), à travers l'injecteur (100) et à travers l'espace (90) pour rediriger un flux d'air de refroidissement vers une partie avant du profil aérodynamique (86) de l'aube directrice (72) et/ou une partie arrière de la pale (70) et du rotor (80), et
l'entretoise (114) inclut une paire de surfaces latérales (134) qui se prolongent entre la surface d'attaque (130) et la surface de fuite (132), et une cavité de diffuseur est définie entre la surface d'attaque (130), le profil aérodynamique (86) et des parties de la première partie de carter (110), la plate-forme d'aube externe (82), la plate-forme d'aube interne (84) et la seconde partie de carter (112).
